# EUROPÄISCHE PATENTSCHRIFT

(11) **EP 2 204 619 B1**
(45) Veröffentlichungstag und Bekanntmachung des Hinweises auf die Patenterteilung: **03.10.2018**
(21) Anmeldenummer: 09179883.5
(22) Anmeldetag: 18.12.2009
(51) Int. Cl.: F24D 19/10, F24F 1/00

(54) **VORRICHTUNG UND VERFAHREN FÜR EINEN OPTIMIERTEN BETRIEB EINES KLIMATISIERUNGSSYSTEMS UND KLIMATISIERUNGSSYSTEM**
DEVICE AND METHOD FOR THE OPTIMAL OPERATION OF AN AIR-CONDITIONING SYSTEM AND AIR-CONDITIONING SYSTEM
DISPOSITIF ET PROCÉDÉ POUR UN FONCTIONNNEMENT OPTIMISÉ D'UN SYSTÈME DE CLIMATISATION ET SYSTÈME DE CLIMATISATION

(30) Priorität: 03.01.2009 DE 102009003883
(43) Veröffentlichungstag der Anmeldung: 07.07.2010
(73) Patentinhaber: Robert Bosch GmbH, 70442 Stuttgart (DE)
(72) Erfinder: Nussbaum, Martin, 59602 Rüthen (DE); Andersson, Johan, 57337 Tranas (SE)

(56) Entgegenhaltungen:
- EP-A1- 1 438 536
- DE-A1- 19 620 399
- DE-A1- 19 702 416
- DE-A1-102006 028 521
- DE-U1- 20 102 546

## Beschreibung

Die Erfindung betrifft eine Vorrichtung für einen optimierten Betrieb eines Klimatisierungssystems, insbesondere einer in Heiz- und Kühlmodi betreibbaren Wärmepumpenanlage, nach dem Oberbegriff des Patentanspruches 1. Weiter betrifft die Erfindung ein Verfahren zum optimierten Betreiben eines Klimatisierungssystems, insbesondere einer in Heiz- und Kühlmodi betreibbaren Wärmepumpenanlage, nach dem Oberbegriff des Anspruchs 6. Zudem betrifft die Erfindung ein Klimatisierungssystem zur Klimatisierung einer Umgebung, insbesondere für geschlossene Räume zu deren Kühlung oder Erwärmung, nach dem Oberbegriff des Anspruchs 9.

Aus dem allgemeinen Stand der Technik sind verschiedene Klimatisierungssysteme mit Kühlmöglichkeiten für diverse Arten von Wärmepumpen bekannt. Bei einer passiven Kühlung mittels des Klimatisierungssystems wird zum Beispiel ein ganzjährig niedriges Temperaturniveau im Erdreich über entsprechende Erdsonden oder Solekollektoren genutzt, um zum Beispiel eine Raumtemperatur mittel des Klimatisierungssystems zu regulieren. Bei einer Kühlart ist dabei eine Wärmepumpe des Klimatisierungssystems nicht in Betrieb und alleine vorhandene Umwälzpumpen sorgen für eine Zirkulation eines Kühlmediums. Leistungsgrenzen werden bei dieser Methode durch eine beim Kühlen ansteigende Soletemperatur und die Art eines Wärmeübertragungssystems, zum Beispiel einer Umgebung in einem Gebäude, gesetzt. Eine passive Kühlung wird als in die Wärmepumpe integriertes System oder als externes Zubehör angeboten.

Eine aktive Kühlung ist ebenfalls aus dem allgemeinen Stand der Technik bekannt. Diese Lösungen weisen jedoch keine Trennung zwischen Solekreis und Heizkreis auf, das heißt, dass in dem gesamten System ein Wasser-Frostschutzmittel-Gemisch strömt.

Aus dem allgemeinen Stand der Technik (z.B. aus EP1438536 und DE 102006028521) sind auch Lösungen bekannt, bei denen eine Trennung zwischen Sole- und Heizkreislauf mit Hilfe von Wärmeübertragern realisiert wird. Bei den bekannten Lösungen wird eine aktive Kühlstation mit zwei integrierten Zirkulationspumpen, einem Dreiwege-Umschaltventil, sechs Zweiwege-Umschaltventilen und zwei Plattenwärmeübertragern realisiert. Je nach Ventilstellung können die drei verschiedene Betriebsarten Heizbetrieb, passive Kühlung und aktive Kühlung unterschieden werden.

Die Vorteile des bekannten Systems sind Folgende. Es erfolgt eine Trennung von Sole- und Heizkreis durch den Plattenwärmeübertrager, sodass unterschiedliche Fluide in den getrennten Kreisen verwendet werden können. In einem Heizbetrieb wird die Leistung der Wärmepumpe, gekennzeichnet durch einen sogenannten COP-Wert, nicht negativ beeinflusst. Bei geringen Kühllasten und ausreichend geringer Soletemperatur kann zunächst die passive Kühlung genutzt werden, bevor auf die aktive Kühlung umgeschaltet wird. In einem aktiven Kühlbetrieb kann gleichzeitig Warmwasser in einem separaten Warmwasserspeicher erwärmt werden.

Jedoch weist die Lösung Nachteile auf, zum Beispiel einen komplexen und aufwendigen Aufbau durch Verwendung von sieben Ventilen. Dies führt zu einem komplizierten hydraulischen Aufbau mit vielen möglichen Fehlerquellen, großen Dimensionen und hohem Gewicht. Zwei Umwälzpumpen müssen bei dieser hydraulischen Schaltung integriert sein, wovon eine die Kühlflächenversorgung in den Räumen im Kühlbetrieb übernimmt. Durch die Integration dieser Pumpe ist eine korrekte Dimensionierung für das nachgeschaltete hydraulische System zum Heizen/Kühlen der Umgebung, zum Beispiel eines Hauses, nicht möglich. Entsprechend sind Über- oder Unterdimensionierungen die Folge. Im passiven Kühlbetrieb besteht keine Möglichkeit, die Soletemperatur der Taupunkttemperatur in den zu klimatisierenden Räumen anzugleichen. Ist die Soletemperatur geringer als die Taupunkttemperatur, kann eine Regelung nur über einen Start-/Stopp-Betrieb der Pumpe stattfinden. Liegt die Soletemperatur unter 0°C, ist der Einsatz von passiver Kühlung unmöglich, da das normale Heizungswasser im Plattenwärmeübertrager einfrieren würde.

Das bekannte System bietet zudem keine Möglichkeit, während des passiven Kühlbetriebs gleichzeitig warmes Brauchwasser zu erzeugen. Während der Warmwasserbereitung muss auf die aktive Kühlung umgeschaltet werden. Wird im aktiven Kühlbetrieb nicht die gleiche Menge an Kühlenergie im Verbraucherkreis abgenommen, wie sie von der Wärmepumpe bereitgestellt wird, führt dies zu einem starken Takten der Wärmepumpe, da eine Regelung nur über das Ein- bzw. Ausschalten der Wärmepumpe möglich ist. Eine zu starke Taktung verringert die Lebensdauer der Wärmepumpe. Liegt eine Anforderung für eine Warmwasserbereitung im aktiven Kühlbetrieb vor, so kann der aktive Kühlbetrieb nur fortgesetzt werden, wenn garantiert ist, dass die gesamte Kühlleistung der Wärmepumpe durch den Heizkreis abgenommen wird. Ist dies nicht der Fall, z. B. durch geringe Kühllasten in der zu klimatisierenden Umgebung, so muss der aktive Kühlbetrieb unterbrochen werden und in den konventionellen Warmwasserbetrieb gewechselt werden. Der aktive Kühlbetrieb kann nur so lange genutzt werden, bis die Sole- und Erdreichtemperatur eine bestimmte Höchsttemperatur erreicht hat. Damit wird verhindert, dass bei einer Umschaltung in den Warmwasserbetrieb, ohne dass die aktive Kühlung weiterhin genutzt wird, die in den Verdampfer eintretende Sole eine zu hohe Temperatur aufweist und die Funktionsweise der Wärmepumpe beeinträchtigt ist.

Der Erfindung liegt die Aufgabe zugrunde, ein Klimatisierungssystem, eine Vorrichtung und ein Verfahren zu schaffen, welche effektiver Wirken und weniger komplex sind.

Erfindungsgemäß wird dies durch die Gegenstände mit den Merkmalen des Patentanspruches 1, des Patentanspruches 6 und des Patentanspruches 9 gelöst. Vorteilhafte Weiterbildungen sind den Unteransprüchen zu entnehmen.

Die erfindungsgemäße Vorrichtung für einen optimierten Betrieb eines Klimatisierungssystems, insbesondere einer in Heiz- und Kühlmodi betreibbaren Wärmepumpenanlage, umfassend einen Solekreis und einen davon trennbar ausgebildeten Heizkreis, wobei der Solekreis und der Wärmekreis jeweils einen Zufluss zu und einen Abfluss von einer Wärmepumpe aufweisen, der Heizkreis einen Zufluss zu und einen Abfluss von einem Verbraucher aufweist und der Solekreis einen Zufluss zu und einen Abfluss von einem Kollektor aufweist, und wobei der Solekreis und der Heizkreis durch mindestens einen Wärmetauscher gekoppelt sind, ist dadurch gekennzeichnet, dass im Solekreis wenigstens ein Mischventil vorgesehen ist, durch welches zumindest in einem Kühlmodus ein Volumenstrom über den Wärmetauscher zu dem Zufluss zu der Wärmepumpe stufenlos einstellbar ist.

In einer Ausführungsform der vorliegenden Erfindung ist vorgesehen, dass im Solekreis Zu- und/oder Abfluss der Wärmepumpe über zwei Mischventile mit Zu- und/oder Abfluss des Kollektors fluidisch verbindbar gekoppelt ist. Vorzugsweise sind die Mischventile als Dreiwegeventil ausgebildet.

In einer weiteren Ausführungsform der vorliegenden Erfindung ist vorgesehen, dass der Zu- und/oder Abfluss zu dem Verbraucher stellgliedfrei ausgebildet ist.

Ein Ausführungsbeispiel der vorliegenden Erfindung sieht vor, dass der Zu- und/oder Abfluss des Heizkreises zu und/oder von der Wärmepumpe mit dem Zu- und/oder Abfluss des Heizkreises zu dem Verbraucher über mindestens eine Bypassleitung fluidisch verbunden ist.

Das erfindungsgemäße Verfahren zum optimierten Betreiben eines Klimatisierungssystems, insbesondere einer in Heiz- und Kühlmodi betreibbaren Wärmepumpenanlage, mit einem durch Wärmetauscher getrennten Heizkreis und Solekreis, umfassend das Regeln der Heizleistung eines Heizkreises, ist dadurch gekennzeichnet, dass das Regeln ein stufenloses Einstellen einer Vorlauftemperatur für den dem Heizkreis vorgeschalteten Wärmetauscher umfasst.

Ein Ausführungsbeispiel der vorliegenden Erfindung sieht vor, dass das stufenlose Einstellen in einem Kühlmodus, insbesondere in einem aktiven oder einem passiven Kühlmodus, durchgeführt wird.

Ein weiteres Ausführungsbeispiel der vorliegenden Erfindung sieht vor, dass das stufenlose Einstellen mittels Einstellen mindestens eines Mischventils durchgeführt wird.

Das erfindungsgemäße Klimatisierungssystem zur Klimatisierung einer Umgebung, insbesondere für geschlossene Räume, zu deren Kühlung oder Erwärmung, umfassend eine nicht-fossile Energiequelle, wie eine Sole-Energiequelle und eine Energiesenke wie einen Heizenergieverbraucher, ist dadurch gekennzeichnet, dass zur Regelung des Klimatisierungssystems eine erfindungsgemäße Vorrichtung vorgesehen ist. Dabei kann das Klimatisierungssystem einen mit der Vorrichtung koppelbaren Warmwasserspeicher mit einem Speichertank zum Speichern von Wärmeenergie aufweisen.

Die erfindungsgemäße Lösung für eine aktive Kühlstation umfasst neben den verbindenden Rohrleitungen eine Umwälzpumpe, zwei Plattenwärmeübertrager, drei Mischventile und ein Rückschlagventil. Die Umwälzpumpe für den Verbraucherkreis muss nicht in den Heizkreis integriert werden und kann nachträglich eingebaut und in Abhängigkeit von dem System entsprechend dimensioniert werden. Eine kompakte und gewichtsarme Bauweise für alle Betriebsmodi kann somit auf einfache Weise realisiert werden. Es wird eine Trennung durch die Plattenwärmetauscher von Sole- und Heizkreis realisiert. Leckagen, Wartungs- oder Reparaturarbeiten im Heizkreis beeinflussen somit nicht den empfindlichen Solekreis durch evtl. Luft- und/oder Schmutzeintrag. Der Heizkreis muss nicht resistent gegen unterschiedliche Sole-Flüssigkeiten sein. Da keine Sole durch den Kondensator strömt, können auch Solegemische verwendet werden, die bei höheren Temperaturen nicht beständig sind. Bei geringen Kühllasten wird erst mit geringem Energieaufwand die passive Kühlung genutzt und die aktive Kühlung wird zur Deckung von Spitzenlasten im Hochsommer eingeschaltet. Durch die Nutzung von passiver und aktiver Kühlung wird dem Erdreich, im Gegensatz zum Heizbetrieb, Kälte entzogen und dort Wärme gespeichert. Das Erdreich wird so nach einer Heizperiode regeneriert und führt in der kommenden Heizperiode zur verbesserten Leistung (COP) der Wärmepumpe. Die Installation der Vorrichtung kann nachträglich in bestehende Systeme erfolgen und beeinflusst die Leistung der Wärmepumpe im Heizbetrieb nicht. Im aktiven Kühlbetrieb kann gleichzeitig eine Warmwasserbereitung stattfinden. Jedes Wärmeübertragungssystem in den Räumen kann durch taupunktgeregelte Vorlauftemperaturen als Kühlsystem genutzt werden.

Insgesamt lässt sich erfindungsgemäß, im Vergleich zum Stand der Technik, eine wesentliche Reduzierung der Einbauteile bei besserer Funktionsweise mit geringeren Fehlerquellen realisieren. Mehrere Zweiwege-Umschaltventile und Dreiwege-Umschaltventile werden durch zwei Dreiwege-Mischventile und ein Dreiwege-Umschaltventil ersetzt. Eine Umwälzpumpe ist in das System integriert. Die Umwälzpumpe des Heizkreises kann dem folgenden hydraulischen System nach dimensioniert werden. Eine Über- bzw. Unterdimensionierung ist damit ausgeschlossen. Die Rohrleitungsverbindungen sind auf ein Minimum reduziert und die Reduzierung der Einbauteile führt zu einer platzsparenden und gewichtsreduzierten Bauweise.

Im passiven Kühlbetrieb kann die Vorlauftemperatur des Heizkreises über eines der Dreiwege-Mischventile stets so eingestellt werden, dass sie der erforderlichen, eingestellten oder immer oberhalb des Taupunktes liegen Vorlauftemperatur entspricht; und dies mit sehr hoher Genauigkeit. Eine ungenaue Steuerung über das Starten und Stoppen der Pumpen ist nicht erforderlich. Mit einer entsprechenden Frostschutzüberwachung am Plattenwärmeübertrager können Soletemperaturen unter 0°C zur passiven Kühlung verwendet werden. Eine Warmwasserbereitung ist während des passiven Kühlbetriebs möglich, ohne dass bei laufender Wärmepumpe auf aktive Kühlung umgeschaltet werden muss. Die Gefahr, dass die Kühlleistung nicht abgenommen werden kann, oder dass der passive Kühlbetrieb für die Zeit der Brauchwassererwärmung eingestellt werden muss, ist nicht gegeben. Im aktiven Kühlbetrieb kann ebenfalls über eines der Mischventile die Vorlauftemperatur im Heizkreis genau eingestellt werden, indem der Volumenstrom über den Plattenwärmetauscher geregelt wird. Um ein zu starkes Takten der Wärmepumpe bei nur geringer Abnahme der Kühlleistung über den Heizkreis zu verhindern, kann ein weiteres Dreiwege-Mischventil verwendet werden, um den nicht nutzbaren Teil der Kühlleistung über den Erdkollektor im Erdreich einzuspeichern. Die Warmwasserbereitung ist auch während des aktiven Kühlbetriebs möglich. Hierfür kann wieder eines der Dreiwege-Mischventile dazu verwendet werden, einen nicht nutzbaren Teil der Kühlleistung über den Erdkollektor im Erdreich einzuspeichern. Ist die Warmwasserbereitung abgeschlossen und das Erdreich hat sich weit genug abgekühlt, so kann zunächst in den passiven Kühlbetrieb gewechselt werden, bevor der aktive Kühlbetrieb erneut gestartet wird. Durch eines der Dreiwege-Mischventile wird ermöglicht, dass nach langer Nutzung der aktiven Kühlung und somit hohen Erdreich- und Soletemperaturen, eine Umschaltung in den reinen Warmwasserbereitungsbetrieb ohne Probleme realisierbar ist.

Die Zeichnungen stellen ein Ausführungsbeispiel der Erfindung dar. Es zeigt, jeweils schematisch:
- Fig. 1: in einem Schaltbild ein erfindungsgemäßes Klimatisierungssystem,
- Fig. 2a: das Klimatisierungssystem nach Fig. 1 in einem Heizbetrieb,
- Fig. 2b: das Klimatisierungssystem nach Fig. 2a in einem Warmwasserbetrieb,
- Fig. 3a: das Klimatisierungssystem nach Fig. 1 in einem passiven Kühlmodus,
- Fig. 3b: das Klimatisierungssystem nach Fig. 3a in einem Warmwasserbetrieb,
- Fig. 4a: das Klimatisierungssystem nach Fig. 1 in einem aktiven Kühlmodus,
- Fig. 4b: das Klimatisierungssystem nach Fig. 4a in einem Warmwasserbetrieb und
- Fig. 5: das Klimatisierungssystem nach Fig. 1 in einem aktiven Kühlmodus mit Warmwasserbereitung nach einem langen aktiven Kühlbetrieb.

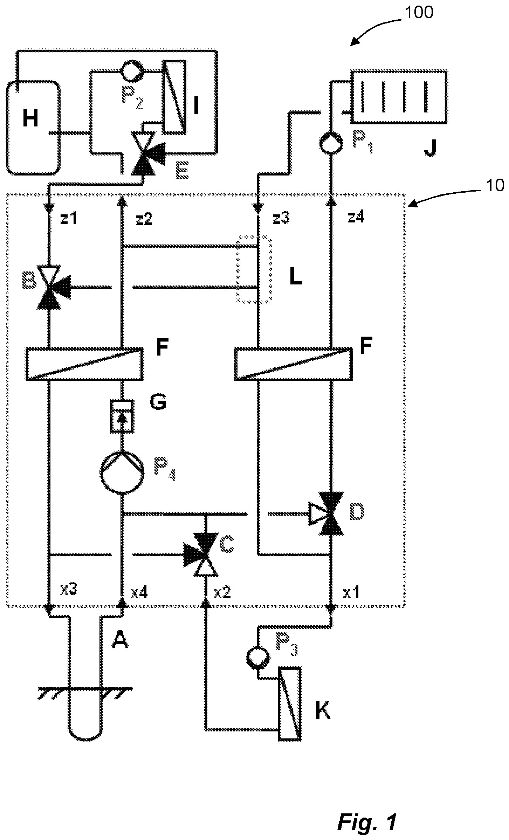

Fig. 1 zeigt schematisch ein als hydraulisches System ausgebildetes Klimatisierungssystem 100 mit einer Wärmepumpe I, K gemäß der vorliegenden Erfindung. Die Wärmepumpe I, K umfasst einen Kondensator I, welcher die "warme Seite" der Wärmepumpe I, K bildet, und einen Verdampfer K, welcher die "kalte Seite" der Wärmepumpe I, K bildet. Die "warme Seite" und die "kalte Seite" sind durch zwei Wärmetauscher F, beispielsweise zwei Plattenwärmeübertrager, getrennt. Die zwei Wärmetauscher F bilden eine aktive Kühlstation 10. In der "kalten Seite" und der "warmen Seite" können unterschiedliche Fluide zirkulieren. Der Fluidkreis der "kalten Seite" wird als Solekreis bezeichnet, wobei Fluidströme des Solekreises in den Figuren Bezugszeichen mit dem Buchstaben "x" zugewiesen sind. Der Fluidstrom x1 stellt einen Solestrom zu dem Verdampfer K dar. Der Fluidstrom x2 stellt einen Solestrom von dem Verdampfer K weg dar. Der Fluidstrom x3 stellt einen Solestrom zu einem Kollektor A dar. Der Solestrom x4 stellt einen Solestrom von dem Kollektor A weg dar. Der Fluidkreis der "warmen Seite" wird als Heizkreis oder Heizfluidkreis bezeichnet, dessen Ströme in den Figuren Bezugszeichen mit der Ziffer "z" zugewiesen sind. In dem Heizkreis strömt ein Wärmeträgermedium.

Der Fluidstrom z1 stellt einen Heizstrom vom Kondensator I weg dar. Der Fluidstrom z2 stellt einen Heizstrom hin zum Kondensator I dar. Der Fluidstrom z3 stellt einen Heizstrom weg von einem Verbraucher J dar. Der Fluidstrom z4 stellt einen Heizstrom zum Verbraucher J dar. In die Wärmepumpe I, K ist weiter im Heizkreis ein Dreiwege-Umschaltventil E und eine Umwälzpumpe P2 integriert. Im Solekreis ist in die Wärmepumpe I, K eine Umwälzpumpe P3 integriert. Weiter kann ein Warmwasserspeicher H, wie links oben in der Fig. 1 dargestellt, in den Heizkreis integriert sein. Alternativ ist ein externer Warmwasserspeicher denkbar.

Im Heizkreis ist der Verbraucher J angeordnet. Bei dem Verbraucher J handelt es sich beispielsweise um ein Wärmeübertragungssystem in Wohnräumen eines Gebäudes, wie Fußboden-, Decken-, Wandheizung, Gebläsekonvektoren oder dergleichen. Dem Verbraucher J ist eine Umwälzpumpe P1 zugeordnet.

Im Solekreis ist der Kollektor A vorgesehen, welcher beispielsweise in einer Tiefenbohrung angeordnet ist und/oder als horizontales Kollektorfeld ausgebildet ist.

Zur Steuerung der Ströme z1 - z4 im Heizkreis ist weiter ein Dreiwege-Umschaltventil B vorgesehen. Weiter weist der Heizkreis einen Bypass L auf. Im Solekreis sind erfindungsgemäß Dreiwege-Mischventile C, D, vorzugsweise zwei Dreiwege-Mischventile vorgesehen. In dem dargestellten Ausführungsbeispiel werden die Fluidströme im Solekreis weiter durch ein Rückschlagventil G und eine in die Kühlstation 10 integrierte Umwälzpumpe P4 gesteuert.

Aus Gründen der Vereinfachung wird hier auf die Darstellung des internen Wärmepumpenprozesses (Kompressor, Expansionsventil, etc.) verzichtet. Die Umwälzpumpe P1 für den Verbraucherkreis ist nicht integriert und kann beispielsweise von einem Planer des Systems entsprechend passend dimensioniert werden.

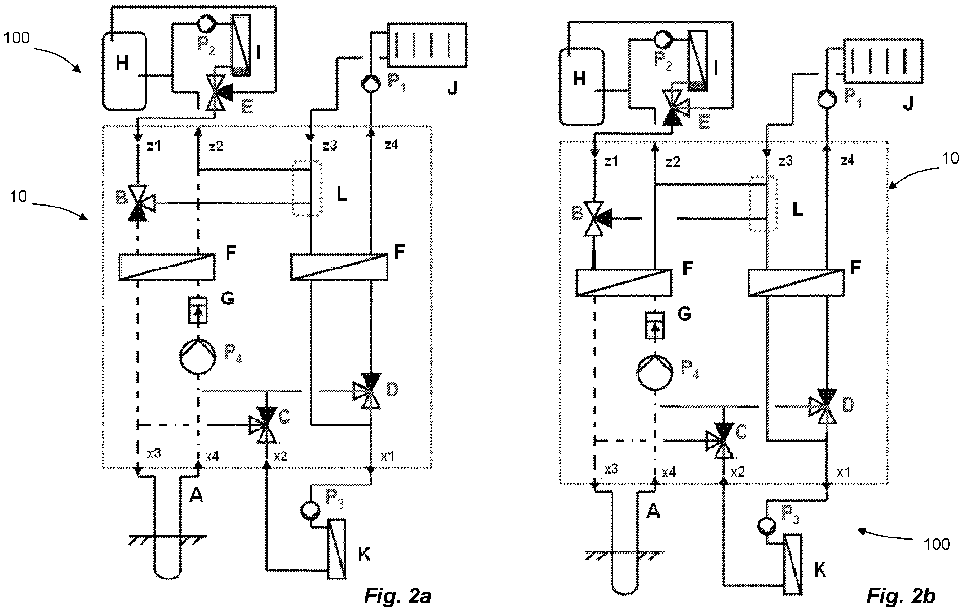

Die einzelnen Betriebsmodi werden in den folgenden Figuren genauer beschrieben. Fig. 2a und 2b zeigen das hydraulische Konzept des Klimatisierungssystems 100 gemäß Fig. 1 bei einer Funktionsweise im Heizbetrieb, wobei Fig. 2a den reinen Heizbetrieb zeigt und Fig. 2b eine gleichzeitige oder zeitweilige Brauchwassererwärmung ohne Wechsel des Betriebsmodus darstellt.

Im Heizbetrieb funktioniert die Wärmepumpe I, K nach dem bekannten Prinzip, jedoch sind der Bodenkollektor A sowie ein Verteilsystem des als Heizungssystem ausgebildeten Verbrauchers J nicht direkt mit der Wärmepumpe K, I verbunden. Eine hydraulische Verbindung findet in der aktiven Kühlstation 10 statt. Ist die Wärmepumpe I, K in Betrieb, so läuft ein innerer Kreisprozess der Wärmepumpe I, K durch Kältemittelgasverdichtung und Expansion ab. In dem Verdampfer K der Wärmepumpe I, K herrscht dadurch ein geringeres Temperaturniveau als in dem Kondensator I der Wärmepumpe I, K.

Durch die sich im Betrieb befindenden Pumpen P2 und P1 auf einer Heizkreisseite, wird die Wärmeenergie des Klimatisierungssystems 100 über ein Wärmeträgermedium des Wärmeübertragungssystems des Verbrauchers J in die Räume transportiert und gelangt dann zurück zum Verdampfer K. In einer optimalen Ausführung sind die Volumenströme der beiden Pumpen P1, P2 gleich dimensioniert. Unterschiedliche Volumenströme in verschiedenen Betriebszuständen lassen sich durch den vorhandenen Bypass L ausgleichen. Sollte eine Warmwasseranforderung im Warmwasserspeicher H anliegen, so kann jederzeit durch das Ventil E eine Umschaltung erfolgen.

Auf der Solekreisseite umfasst die Wärmepumpe I, K eine integrierte Solepumpe P3. Im Betrieb befördert diese durch die Stellung der Ventile C und D die Sole aus dem Kollektor A über den Verdampfer K zurück in den Kollektor A.

Durch den Einsatz der aktiven Kühlstation 10 wird die Funktion und Leistung der Wärmepumpe I, K im Heizbetrieb nicht beeinträchtigt.

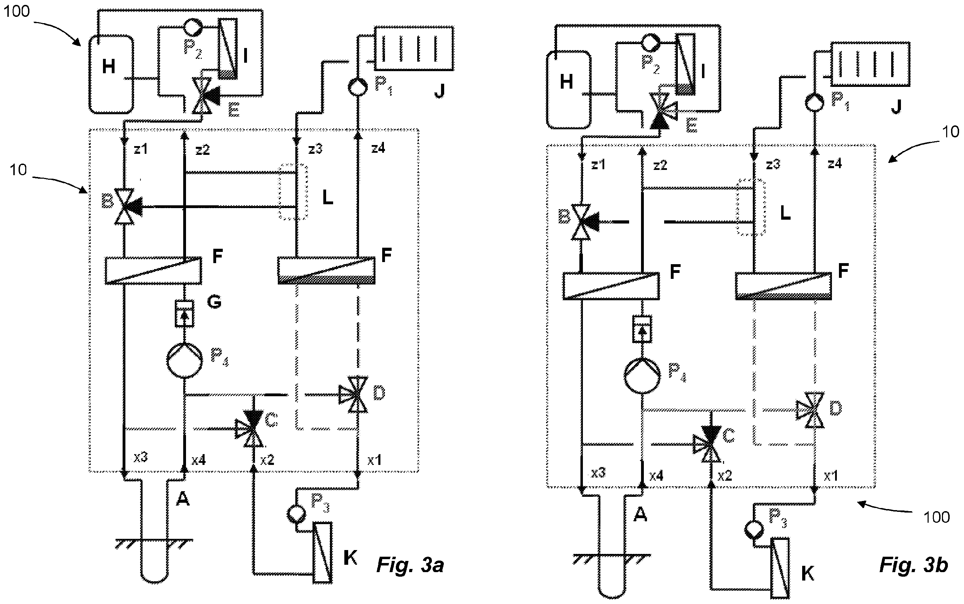

Fig. 3a zeigt schematisch das Klimatisierungssystem 100 nach Fig. 1 in einem passiven Kühlmodus und Fig. 3b zeigt schematisch das Klimatisierungssystem 100 nach Fig. 3a im Warmwasserbetrieb.

Im passiven Kühlbetrieb ist die Wärmepumpe I, K nicht in Betrieb. Lediglich die Pumpe P1 auf der Heizkreisseite und die Pumpe P3 auf der Solekreisseite sorgen für die Zirkulation der Fluide. Weist die aus dem Kollektor A kommende Sole eine Soletemperatur auf, die gering genug ausgebildet ist, um eine Kühllast in den Räumen des Verbrauchers J zu decken, so fördert die Pumpe P3 die Sole aus dem Kollektor A durch das Mischventil D. In diesem Mischventil D wird der Volumenstrom des Solefluids über den Wärmetauscher oder Wärmeübertrager F abhängig von einer erforderlichen Vorlauftemperatur des Heizkreises eingestellt. Somit ist es möglich den Heizkreis immer mit der erforderlichen oder eingestellten Vorlauftemperatur zu versorgen, die, falls erforderlich, stets über dem Taupunkt liegen kann.

Liegt während des passiven Kühlbetriebs eine Anforderung für die Erwärmung des Warmwassers an, so geht die Wärmepumpe I, K in Betrieb. Auf der Heizkreisseite wird durch das Ventil E auf die Warmwasserbereitung umgestellt. Auf der Soleseite wird durch die Pumpe P3 und die Stellung des Ventils C, die im Verdampfer K abgekühlte Sole durch den Erdkollektor A gepumpt. Die sich auf einem höheren Temperaturniveau befindlichen, aus dem Kollektor A austretende Sole, wird dann je nach Bedarf im Ventil D über den Plattenwärmetauscher F geleitet. Somit ist sichergestellt, dass eine Warmwasserbereitung während der passiven Kühlung keinen Einfluss auf den Kühlbetrieb hat.

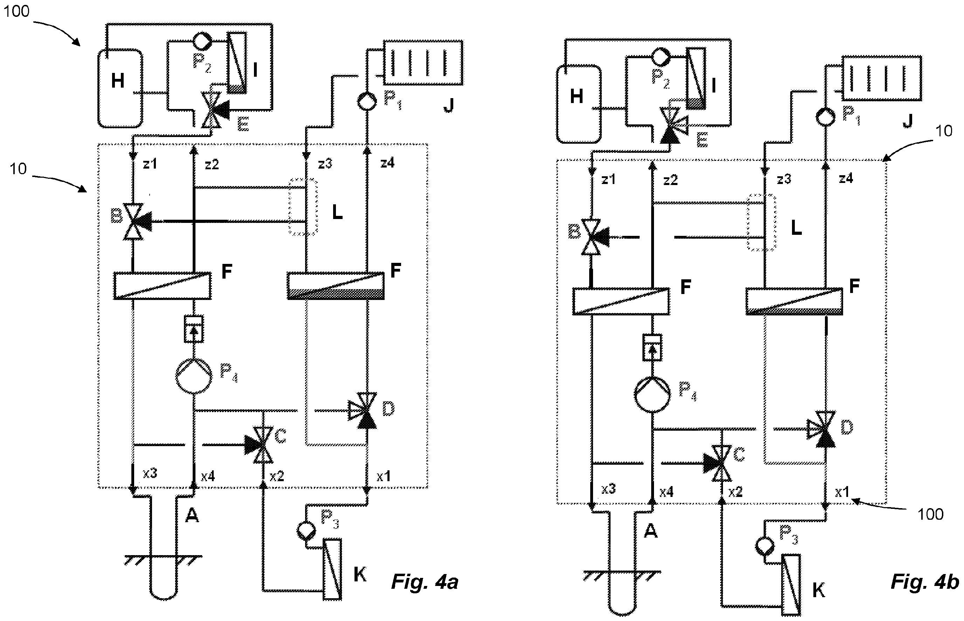

Fig. 4a zeigt schematisch das Klimatisierungssystem 100 nach Fig. 1 in einem aktiven Kühlmodus und Fig. 4b zeigt schematisch das Klimatisierungssystem 100 nach Fig. 4a in einem Warmwasserbetrieb.

Der aktive Kühlbetrieb kommt zum Einsatz, wenn die Kühllast des Verbrauchers J durch die passive Kühlung nicht mehr gedeckt werden kann. Kennzeichnend für diesen Betrieb ist, dass bei laufender Wärmepumpe I, K der Wärmepumpenprozess innerhalb der aktiven Kühlstation 10 umgekehrt wird.

Durch die Stellung der Ventile C und D wird durch die Umwälzpumpe P3 die sich im Verdampfer K abgekühlte Sole, durch den Plattenwärmeübertrager F gefördert und wieder zurück zum Verdampfer K transportiert. Durch den gleichen Plattenwärmeübertrager F strömt auf der anderen Seite das durch die Umwälzpumpe P1 geförderte Heizungswasser, welches zu den Wärmeübertragungssystemen in den Räumen transportiert wird.

Die im Kondensator I anfallende Wärme wird durch die Pumpe P2 über den Plattenwärmeübertrager F transportiert. Durch den Betrieb der Pumpe P4 auf der Soleseite wird diese Wärme über den Erdkollektor ins Erdreich eingespeichert. Ein Umschalten auf eine Warmwasserbereitung ist jederzeit möglich.

Im aktiven Kühlbetrieb sowie bei der gleichzeitigen Warmwasserbereitung kann der Fall auftreten, dass die Kühllast in den Räumen geringer ist, als die durch die Wärmepumpe I, K bereitgestellte Kälteleistung. Dies könnte im normalen Betrieb bedeuten, dass die Wärmepumpe I, K dies durch starkes Takten ausgleichen müsste. Im Warmwasserbetrieb bedeutet dies, dass der Kühlbetrieb eingestellt werden muss und auf den normalen Warmwasserbetrieb umgeschaltet werden muss.

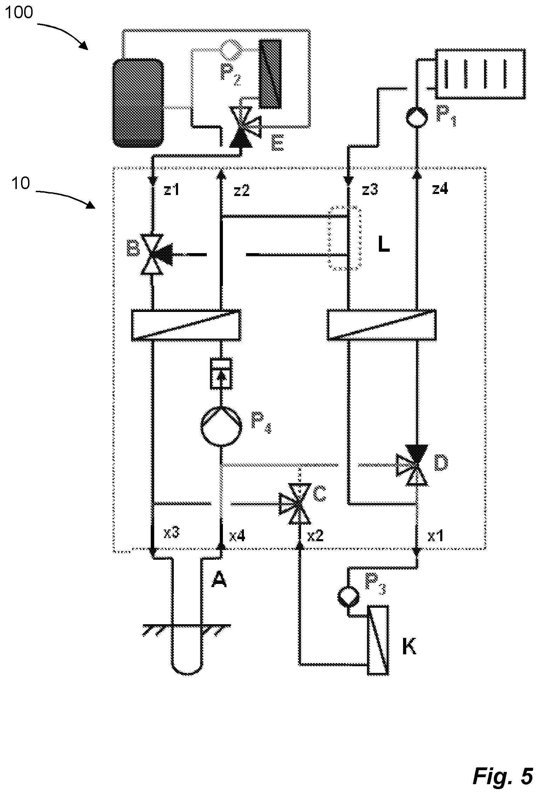

Um eine Mindestlaufzeit der Wärmepumpe I, K zu garantieren und den Kühlbetrieb während einer Warmwasserbereitung nicht einstellen zu müssen, kann das Ventil C dazu benutzt werden, einen Teil der nicht nutzbaren Kälteleistung über den Kollektor A im Erdreich einzuspeichern. Eine ähnliche Funktion des Ventils C ist in Fig. 5 dargestellt, wobei der aktive Kühlbetrieb unverändert betrieben wird.

Sollte bei einer längeren aktiven Kühlphase mit gleichzeitiger Warmwasserbereitung, stets ein Teil der Kälteleistung im Erdreich eingespeichert werden, so kann bei ausreichend abgekühlter Sole im Erdreich in dieser Zeit zunächst die passive Kühlung genutzt werden, sobald die Warmwasserbereitung beendet ist.

Fig. 5 zeigt schematisch das Klimatisierungssystem 100 nach Fig. 1 in einem aktiven Kühlmodus mit Warmwasserbereitung nach einem langen aktiven Kühlbetrieb. An einem oder mehreren aufeinanderfolgenden warmen Tagen kann es vorkommen, dass durch die ständige Nutzung der aktiven Kühlung sich das Erdreich durch die damit verbundene Einspeicherung der Wärmeenergie vom Kondensator I so weit erwärmt hat, dass die Soleeintrittstemperatur in den Verdampfer K zu hoch ist und die Funktion der Wärmepumpe I, K beeinträchtigen würde. Dies tritt dann auf, wenn die Nutzung der aktiven Kühlung, z. B. am Abend, nicht mehr erforderlich ist und eine Warmwasserbereitung notwendig ist. In diesem Fall wird das Ventil C dazu benutzt, zuerst den Solekreislauf über das Ventil C, das Ventil D und den Verdampfer K geschlossen zu halten. Bei laufender Wärmepumpe I, K kühlt sich die in diesem Kreis zirkulierende Sole immer weiter ab. Wird eine minimale Temperatur der Sole erreicht, öffnet sich langsam das Ventil C in Richtung des Erdkollektors A. Je nach Bedarf wird dann mehr und mehr wärmere Sole aus dem Kollektor A einem Verdampferkreis zugemischt.

## Patentansprüche

1. Vorrichtung (10) für einen optimierten Betrieb eines Klimatisierungssystems (100), insbesondere einer in Heiz- und Kühlmodi betreibbaren Wärmepumpenanlage, umfassend einen Solekreis und einen davon trennbar ausgebildeten Heizkreis, wobei der Solekreis und ein Warmwasserbereitungskreis über einen Warmwasserspeicher (H) jeweils einen Zufluss (x1, z2) zu und einen Abfluss (x2, z1) von einer Wärmepumpe (I, K) aufweisen, der Heizkreis einen Zufluss (z4) zu und einen Abfluss (z3) von einem Verbraucher (J) aufweist und der Solekreis einen Zufluss (x3) zu und einen Abfluss (x4) von einem Kollektor (A) aufweist, und wobei der Solekreis und der Heizkreis durch mindestens einen Wärmetauscher (F) gekoppelt sind,
**dadurch gekennzeichnet, dass** im Solekreis wenigstens ein Mischventil (D) vorgesehen ist, durch welches zumindest in einem Kühlmodus ein Volumenstrom über den Wärmetauscher (F) zu dem Zufluss (x1) zu der Wärmepumpe (I, K) stufenlos einstellbar ist.

2. Vorrichtung (10) nach Anspruch 1,
**dadurch gekennzeichnet, dass** Zu- und/oder Abfluss (x1, x2) im Solekreis der Wärmepumpe (I, K) über zwei Mischventile (C, D) mit dem jeweils zugeordneten Zu- und/oder Abfluss (x3, x4) des Kollektors (A) fluidisch verbindbar gekoppelt sind.

3. Vorrichtung (10) nach Anspruch 1 oder 2,
**dadurch gekennzeichnet, dass** mindestens eines der Mischventile (C, D) als Dreiwegeventil ausgebildet ist.

4. Vorrichtung (10) nach einem der Ansprüche 1 bis 3,
**dadurch gekennzeichnet, dass** der Zu- und/oder Abfluss (z4, z3) zu dem Verbraucher (J) stellgliedfrei ausgebildet ist.

5. Vorrichtung (10) nach einem der Ansprüche 1 bis 4,
**dadurch gekennzeichnet, dass** der Zu- und/oder Abfluss (z2, z1) des Heizkreises zu und/oder von der Wärmepumpe (I, K) mit dem Zu- und/oder Abfluss (z4, z3) des Heizkreises zu dem Verbraucher (J) über mindestens eine Bypassleitung (L) fluidisch verbunden ist.

6. Verfahren zum optimierten Betreiben eines Klimatisierungssystems (100) nach einem der Ansprüche 1 bis 5, insbesondere einer in Heiz- und Kühlmodi betreibbaren Wärmepumpenanlage, mit einem durch einen Wärmetauscher (F) getrennten Heizkreis und einem Solekreis, umfassend das Regeln der Heizleistung eines Heizkreises,
**dadurch gekennzeichnet, dass** das Regeln ein stufenloses Einstellen einer Vorlauftemperatur für den dem Heizkreis vorgeschalteten Wärmetauscher (F) umfasst.

7. Verfahren nach Anspruch 6,
**dadurch gekennzeichnet, dass** das stufenlose Einstellen in einem Kühlmodus, insbesondere in einem aktiven oder einem passiven Kühlmodus durchgeführt wird.

8. Verfahren nach Anspruch 6 oder 7,
**dadurch gekennzeichnet, dass** das stufenlose Einstellen mittels Einstellen mindestens eines Mischventils (C, D) durchgeführt wird, wobei Zu- und/oder Abfluss (x1, x2) im Solekreis der Wärmepumpe (I, K) über mindestens ein Mischventil (C, D) mit dem jeweils zugeordneten Zu- und/oder Abfluss (x3, x4) des Kollektors (A) fluidisch verbindbar gekoppelt sind.

9. Klimatisierungssystem (100) zur Klimatisierung einer Umgebung, insbesondere für geschlossene Räume zu deren Kühlung oder Erwärmung, umfassend eine nicht-fossile Energiequelle wie eine Sole-Energiequelle und eine Energiesenke wie einen Heizenergieverbraucher (J),
**dadurch gekennzeichnet, dass** zur Regelung des Klimatisierungssystems (J) eine Vorrichtung (10) nach einem der vorherigen Ansprüche 1 bis 5 vorgesehen ist.

10. Klimatisierungssystem (100) nach Anspruch 9,
**dadurch gekennzeichnet, dass** das Klimatisierungssystem (100) einen mit der Vorrichtung (100) koppelbaren Speichertank (H) zum Speichern von Wärmeenergie aufweist.

## Claims

1. Device (10) for optimized operation of an air-conditioning system (100), in particular of a heat pump installation that can be operated in heating and cooling modes, comprising a brine circuit and a heating circuit that is designed such that it can be separated from the former, wherein the brine circuit and a hot water preparation circuit each have, via a hot water reservoir (H), an inflow (x1, z2) to and an outflow (x2, z1) from a heat pump (I, K), the heating circuit has an inflow (z4) to and an outflow (z3) from a consumer (J) and the brine circuit has an inflow (x3) to and an outflow (x4) from a collector (A), and wherein the brine circuit and the heating circuit are coupled by at least one heat exchanger (F),
**characterized in that** in the brine circuit there is provided at least one mixing valve (D) by means of which, at least in a cooling mode, a volumetric flow via the heat exchangers (F) to the inflow (x1) to the heat pump (I, K) can be set in stepless fashion.

2. Device (10) according to Claim 1,
**characterized in that** the inflow and/or outflow (x1, x2) in the brine circuit of the heat pump (I, K) are coupled, by means of two mixing valves (C, D), such that they can be fluidically connected to the respectively associated inflow and/or outflow (x3, x4) of the collector (A).

3. Device (10) according to Claim 1 or 2,
**characterized in that** at least one of the mixing valves (C, D) is designed as a three-way valve.

4. Device (10) according to one of Claims 1 to 3,
**characterized in that** the inflow and/or outflow (z4, z3) to the consumer (J) is designed without an actuator.

5. Device (10) according to one of Claims 1 to 4,
**characterized in that** the inflow and/or outflow (z2, z1) of the heating circuit to and/or from the heat pump (I, K) is fluidically connected, via at least one bypass line (L), to the inflow and/or outflow (z4, z3) of the heating circuit to the consumer (J).

6. Method for optimized operation of an air-conditioning system (100) according to one of Claims 1 to 5, in particular a heat pump installation that can be operated in heating and cooling modes and that has a heating circuit and a brine circuit separated by a heat exchanger (F), which method involves regulating the heating power of a heating circuit, **characterized in that** regulating comprises stepless setting of an outlet temperature for the heat exchanger (F) connected upstream of the heating circuit.

7. Method according to Claim 6,
**characterized in that** the stepless setting is carried out in a cooling mode, in particular in an active or a passive cooling mode.

8. Method according to Claim 6 or 7,
**characterized in that** the stepless setting is carried out by setting at least one mixing valve (C, D), wherein the inflow and/or outflow (x1, x2) in the brine circuit of the heat pump (I, K) are coupled, via at least one mixing valve (C, D), such that they can be fluidically connected to the respectively associated inflow and/or outflow (x3, x4) of the collector (A).

9. Air-conditioning system (100) for air-conditioning an environment, in particular for closed spaces, for cooling or heating these, comprising a non-fossil energy source such as a brine energy source and an energy sink such as a heating energy consumer (J), **characterized in that**, for regulating the air-conditioning system (J), there is provided a device (10) according to one of the preceding Claims 1 to 5.

10. Air-conditioning system (100) according to Claim 9, **characterized in that** the air-conditioning system (100) has a storage tank (H), that can be coupled to the device (100), for storing heat energy.

## Revendications

1. Dispositif (10) pour un fonctionnement optimisé d'un système de climatisation (100), en particulier d'une installation de pompe à chaleur pouvant fonctionner en modes de chauffage et de refroidissement, comprenant un circuit de saumure et un circuit de chauffage réalisé de manière séparable de celui-ci, le circuit de saumure et un circuit de production d'eau chaude présentant, par le biais d'un accumulateur d'eau chaude (H), à chaque fois une alimentation (x1, z2) à une pompe à chaleur (I, K) et une évacuation (x2, z1) depuis celle-ci, le circuit de chauffage présentant une alimentation (z4) à un consommateur (J) et une évacuation (z3) depuis celui-ci et le circuit de saumure présentant une alimentation (x3) à un collecteur (A) et une évacuation (x4) depuis celui-ci, et le circuit de saumure et le circuit de chauffage étant accouplés par au moins un échangeur de chaleur (F),
**caractérisé en ce qu'**au moins une soupape de mélange (D) est prévue dans le circuit de saumure, à travers laquelle, au moins dans un mode de refroidissement, un débit volumique vers l'alimentation (x1) de la pompe à chaleur (I, K) peut être ajusté en continu par le biais de l'échangeur de chaleur (F).

2. Dispositif (10) selon la revendication 1, **caractérisé en ce que** l'alimentation et/ou l'évacuation (x1, x2) dans le circuit de saumure de la pompe à chaleur (I, K) sont accouplées de manière à pouvoir être connectées fluidiquement par le biais de deux soupapes de mélange (C, D) à l'alimentation et/ou à l'évacuation respectivement associée (x3, x4) du collecteur (A).

3. Dispositif (10) selon la revendication 1 ou 2, **caractérisé en ce qu'**au moins l'une des soupapes de mélange (C, D) est réalisée sous forme de soupape à trois voies.

4. Dispositif (10) selon l'une quelconque des revendications 1 à 3, **caractérisé en ce que** l'alimentation et/ou l'évacuation (z4, z3) au consommateur (J) est réalisée sans organes de commande.

5. Dispositif (10) selon l'une quelconque des revendications 1 à 4, **caractérisé en ce que** l'alimentation et/ou l'évacuation (z2, z1) du circuit de chauffage à et/ou depuis la pompe à chaleur (I, K) sont connectées fluidiquement à l'alimentation et/ou à l'évacuation (z4, z3) du circuit de chauffage au consommateur (J) par le biais d'au moins une conduite de dérivation (L).

6. Procédé pour le fonctionnement optimisé d'un système de climatisation (100) selon l'une quelconque des revendications 1 à 5, en particulier d'une installation de pompe à chaleur pouvant fonctionner en modes de chauffage et de refroidissement, comprenant un circuit de chauffage et un circuit de saumure séparés par un échangeur de chaleur (F), comprenant la régulation de la puissance de chauffage d'un circuit de chauffage,
**caractérisé en ce que** la régulation comprend un ajustement en continu d'une température aller pour l'échangeur de chaleur (F) monté en amont du circuit de chauffage.

7. Procédé selon la revendication 6, **caractérisé en ce que** l'ajustement en continu est effectué dans un mode de refroidissement, en particulier dans un mode de refroidissement actif ou passif.

8. Procédé selon la revendication 6 ou 7, **caractérisé en ce que** l'ajustement en continu est effectué au moyen d'un ajustement d'au moins une soupape de mélange (C, D), l'alimentation et/ou l'évacuation (x1, x2) dans le circuit de saumure de la pompe à chaleur (I, K) étant accouplées de manière à être connectées fluidiquement par le biais d'au moins une soupape de mélange (C, D) à l'alimentation et/ou à l'évacuation respectivement associée (x3, x4) du collecteur (A).

9. Système de climatisation (100) pour la climatisation d'un environnement, en particulier pour des espaces fermés en vue de leur refroidissement ou de leur chauffage, comprenant une source d'énergie non fossile telle qu'une source d'énergie de saumure et un puits d'énergie tel qu'un consommateur d'énergie de chauffage (J), **caractérisé en ce que** pour la régulation du système de climatisation (J), un dispositif (10) selon l'une quelconque des revendications 1 à 5 est prévu.

10. Système de climatisation (100) selon la revendication 9, **caractérisé en ce que** le système de climatisation (100) présente un réservoir accumulateur (H) pouvant être accouplé au dispositif (100) pour le stockage d'énergie thermique.
